# EUROPÄISCHE PATENTSCHRIFT

(11) **EP 3 288 181 B1**
(45) Veröffentlichungstag und Bekanntmachung des Hinweises auf die Patenterteilung: **14.04.2021**
(21) Anmeldenummer: 16185536.6
(22) Anmeldetag: 24.08.2016
(51) Int. Cl.: H02P 29/024, H02P 29/028, H02P 29/64, H02P 6/00, H02P 25/064, H02K 41/03

(54) **STATORVORRICHTUNG FÜR EINEN LINEARMOTOR, LINEARES ANTRIEBSSYSTEM UND VERFAHREN ZUM BETREIBEN EINER STATORVORRICHTUNG**
STATOR DEVICE FOR A LINEAR MOTOR, LINEAR DRIVE SYSTEM AND METHOD OF OPERATING A STATOR DEVICE
DISPOSITIF DE STATOR DE MOTEUR LINEAIRE, SYSTEME D'ENTRAINEMENT LINEAIRE ET PROCEDE DE FONCTIONNEMENT D'UN DISPOSITIF DE STATOR

(43) Veröffentlichungstag der Anmeldung: 28.02.2018
(73) Patentinhaber: Beckhoff Automation GmbH, 33415 Verl (DE)
(72) Erfinder: KAULMANN, Tim, 33104 Paderborn (DE); PRUESSMEIER, Uwe, 32657 Lemgo (DE); VORBOHLE, Thomas, 33397 Rietberg (DE)
(74) Vertreter: Patentanwaltskanzlei WILHELM & BECK

(56) Entgegenhaltungen:
- EP-A1- 1 950 878
- WO-A1-2008/122602
- DE-A1-102009 001 337
- US-A1- 2004 021 437

## Beschreibung

Die Erfindung betrifft eine Antriebseinrichtung für einen Linearmotor. Die Erfindung betrifft ferner ein lineares Antriebssystem. Die Erfindung betrifft des Weiteren ein Verfahren zum Betreiben einer Antriebseinrichtung.

Die DE 10 2012 020 473 A1 zeigt eine Motor-Ansteuervorrichtung mit einer Blindstromanweisungserzeugungseinheit. Es ist vorgesehen, dass eine Spannung auf einer Gleichstrom-Ausgangsseite eines Wandlers detektiert wird, wobei eine numerische Steuereinheit einen Inverter dazu veranlasst, einen Blindstrom zu erzeugen, um dadurch den vom Motor aufgenommenen Strom zu erhöhen. Dadurch soll eine Zwischenkreisspannung reduziert werden. Der Blindstrom soll dazu führen, dass eine Verlustleistung im Motor entsteht.

Die DE 10 2012 020 473 A1 ist also auf ein dreiphasiges System mit über den Motor verketteten Halbbrücken gerichtet.

Die DE 10 2009 054 785 A1 zeigt einen Bremschopper. Die Offenlegungsschrift DE 10 2009 054 785 A1 beschreibt, dass standardmäßig vorhandene Brückenzweige eines Motormoduls geschaltet werden können, um die elektrische Energie eines Spannungszwischenkreises in thermische Energie bei den Bremswiderständen umzuwandeln.

Es ist also vorgesehen, dass an das Motormodul Bremswiderstände geschaltet werden. Es soll bei einem solchen Bremschopper möglich sein, Halbbrücken schalten zu können. Die DE 10 2009 054 785 A1 ist auf ein dreiphasiges Drehstromsystem konzipiert.

In Linearmotoren, die einen Schlitten antreiben, tritt in der Regel bei abrupten Bremsvorgängen des Schlittens eine Rückspeisung von Energie in den Zwischenkreis auf, der zu einer sprunghaften Erhöhung der Zwischenkreisspannung führen kann.

Die überschüssige Energie kann beispielsweise durch eine externe Chopper-Vorrichtung abgeführt werden. Bei dynamischen Anwendungen mit einer hohen Schlittenanzahl und bei einer hohen Last kann es beispielsweise zu einer Überlastung der externen Chopper-Vorrichtung kommen. In einem Überlastfall wird beispielsweise der externe Chopper-Widerstand nicht weiter belastet. In einem solchen Fall wird beispielsweise bei einem nächsten Bremsvorgang eine Überspannung erkannt, was beispielsweise aus Sicherheitsgründen ein Abschalten des Linearmotors zur Folge hat. Dadurch entstehen zum Beispiel Ausfallzeiten des Linearmotors.

Aus der DE 10 2009 001337 A1 ist eine Zuführ- und Regenerationseinheit mit einem Gleichrichter zur Stromversorgung einer elektrischen Anordnung von mehreren dreiphasigen Elektromotoren bekannt. Die Stromversorgung der Elektromotoren weist einen Zwischenkreis auf, wobei eine mit der Zuführ- und Regenerationseinheit gekoppelte Steuereinheit ausgebildet ist, überschüssige Energie aus dem Zwischenkreis, der sich durch einen im Betrieb befindlichen Elektromotor ergibt, in einem nicht im Betrieb befindlichen Elektromotor als Generator zu verbrauchen.

Aus der WO 2008/122602 A1 ein Überspannungsschutz für einen zur Stromversorgung eines Elektromotors vorgesehenen Umrichter bekannt. Der Umrichter umfasst einen elektrischen Zwischenkreis und mehrere im Zwischenkreis parallel geschaltete Halbbrücken, die mit Leistungsschalter umfassen. Es wird eine Zwischenkreisspannung erfasst und Leistungsschalter entsprechend angesteuert, wenn die Zwischenkreisspannung einen vorgegebenen Maximalwert überschreitet.

Aus der US 2004/021437 A1 ist eine adaptive Architektur für Elektromotoren bekannt, bei der Brückenschaltungen eingesetzt werden.

EP 195 878 A1 offenbart eine Antriebsvorrichtung und ein Verfahren zum Betreiben mehrerer Wechselstrommotoren. Aus EP 195 878 A1 ist bekannt, eine Überspannung in der Zwischenkreisspannung durch absichtliches Erhöhen der Leistungsverluste in den jeweiligen Wechselstrommotoren zu verhindern. Aus D1 ist auch bekannt, die Wechselstrommotoren dafür zu verwenden, basierend auf ihren tatsächlichen thermischen Belastung.

Die der Erfindung zugrundeliegende Aufgabe ist daher darin zu sehen, ein Konzept zum effizienten Betreiben eines Linearmotors bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Die Erfindung basiert auf der Erkenntnis, dass die obige Aufgabe dadurch gelöst werden kann, dass eine elektrische Energie, die einer Überspannung im Zwischenkreis entspricht, in die Antriebsspulen abgeführt wird. Dadurch, dass die Antriebsspulen mittels eines eigenen Gleichspannungswandlers mit dem Zwischenkreis elektrisch leitfähig verbunden sind, wird insbesondere der technische Vorteil bewirkt, dass die aus dem Zwischenkreis in die jeweiligen Antriebsspulen einzuspeisende Energie unabhängig voneinander gesteuert oder geregelt werden kann. Der jeweilige Gleichstrom, der auf die Antriebsspulen eingeprägt wird, um die Energie aus dem Zwischenkreis abzuführen, kann somit unabhängig voneinander geregelt werden. Durch das Abführen von Energie aus dem Zwischenkreis in die Antriebsspulen wird eine Zwischenkreisspannung sinken, so dass der Überspannung effizient entgegengewirkt werden kann.

Dadurch wird also insbesondere der technische Vorteil bewirkt, dass bei einer Überspannung im Zwischenkreis elektrische Energie effizient aus dem Zwischenkreis abgeführt werden kann. Dadurch wird insbesondere der technische Vorteil bewirkt, dass eine Überspannung im Zwischenkreis effizient vermieden werden kann. Dadurch wird zum Beispiel der technische Vorteil bewirkt, dass der Linearmotor aufgrund einer Überspannung im Zwischenkreis nicht abgeschaltet werden muss. Dadurch wird zum Beispiel der technische Vorteil bewirkt, dass eine Ausfallzeit des Linearmotors vermieden werden kann. Dadurch wird zum Beispiel der technische Vorteil bewirkt, dass der Linearmotor effizient betrieben werden kann. Insbesondere wird dadurch der technische Vorteil bewirkt, dass der Zwischenkreis vor einer Überspannung effizient geschützt werden kann, so dass dadurch in vorteilhafter Weise Beschädigungen bei elektrischen Bauteilen des Zwischenkreises effizient vermieden werden können. Dadurch wird insbesondere der technische Vorteil bewirkt, dass ein lineares Antriebssystem nicht mit einem speziellen Bremswiderstand aufgerüstet und/oder nachgerüstet werden muss.

Nach einer Ausführungsform ist vorgesehen, dass die Antriebsspulen und die entsprechenden eigenen Gleichspannungswandler jeweils als eine Brückenschaltung zusammengeschaltet sind, wobei die Antriebsspulen jeweils einen Brückenzweig der Brückenschaltung bilden.

Dadurch wird zum Beispiel der technische Vorteil bewirkt, dass die Antriebsspulen mit ihren jeweiligen Gleichspannungswandlern effizient zusammengeschaltet sind. Insbesondere wird dadurch der technische Vorteil bewirkt, dass die Spule effizient in den Gleichspannungswandler integriert werden kann.

Eine Brückenschaltung ist nach einer Ausführungsform als eine Vollbrücke oder als eine Schaltung von Halbbrücken ausgebildet. Die mehreren Brückenschaltungen sind beispielsweise identisch oder unterschiedlich ausgebildet.

Gemäß einer Ausführungsform ist vorgesehen, dass die Steuerungseinrichtung ausgebildet ist, nur Gleichspannungswandler als den zumindest einen Gleichspannungswandler auszuwählen, deren entsprechende Antriebsspulen ein oder mehrere vorbestimmte Kriterien erfüllen.

Dadurch wird zum Beispiel der technische Vorteil bewirkt, dass der Linearmotor effizient betrieben werden kann. Insbesondere wird dadurch der technische Vorteil bewirkt, dass durch das Vorgeben der Kriterien effizient Einfluss darauf genommen werden kann, welche der Antriebsspulen verwendet werden, um Energie aus dem Zwischenkreis abzuführen.

Das heißt also insbesondere, dass nur Antriebsspulen als diejenigen Antriebsspulen verwendet werden, in denen Energie aus dem Zwischenkreis abgeführt werden soll respektive wird, die ein oder mehrere der vorbestimmten Kriterien erfüllen.

Die abzuführende elektrische Energie, die beispielsweise als eine überschüssige Energie bezeichnet werden kann, bezeichnet insbesondere den Anteil der im Zwischenkreis gespeicherten elektrischen Energie, der einer Überspannung entspricht. Beispielsweise wird solange elektrische Energie abgeführt, bis eine Überspannung im Zwischenkreis abgebaut ist.

In einer Ausführungsform ist vorgesehen, dass die Steuerungseinrichtung ausgebildet ist, eine jeweilige thermische Belastung der Antriebsspulen zu ermitteln, wobei das oder die mehreren Kriterien umfassen, dass eine jeweilige ermittelte thermische Belastung der entsprechenden Antriebsspulen kleiner einem vorbestimmten thermischen Belastungsschwellwert ist.

Dadurch wird zum Beispiel der technische Vorteil bewirkt, dass der Linearmotor effizient betrieben werden kann. Insbesondere wird dadurch der technische Vorteil bewirkt, dass eine thermische Belastung der Antriebsspulen aufgrund des Abführens der überschüssigen Energie aus dem Zwischenkreis effizient vermieden werden kann. Das heißt also insbesondere, dass nur diejenigen Antriebsspulen als Antriebsspulen verwendet werden, um Energie aus dem Zwischenkreis abzuführen, die eine thermische Belastung aufweisen, die kleiner einem vorbestimmten thermischen Belastungsschwellwert ist.

Die thermische Belastung wird beispielsweise basierend auf einem thermischen Modell ermittelt. In ein solch thermisches Modell gehen beispielsweise als Eingangsgrößen gemessene Antriebsspulenwerte aus der Vergangenheit ein. Das heißt also beispielsweise, dass nach einer Ausführungsform basierend auf vergangenen Antriebsspulenstromwerten eine momentane thermische Belastung der entsprechenden Antriebsspule ermittelt wird. Je höher ein vergangener Strom in den Antriebsspulen war, je höher ist in der Regel auch eine entsprechende momentane thermische Belastung.

In einer Ausführungsform ist vorgesehen, dass das oder die mehreren Kriterien umfassen, dass die entsprechenden Antriebsspulen momentan unbeteiligt an einer Regelung eines Antriebs eines magnetischen Läufers sind.

Dadurch wird zum Beispiel der technische Vorteil bewirkt, dass der Linearmotor effizient betrieben werden kann. Insbesondere wird dadurch der technische Vorteil bewirkt, dass der magnetische Läufer effizient angetrieben werden kann. Insbesondere wird dadurch der technische Vorteil bewirkt, dass eine Regelung eines Antriebs eines magnetischen Läufers nicht gestört wird.

Das heißt also insbesondere, dass nur diejenigen Antriebsspulen als Antriebsspulen verwendet werden, um Energie aufgrund einer Überspannung aus dem Zwischenkreis abzuführen, die momentan nicht den magnetischen Läufer antreiben.

Der magnetische Läufer umfasst zum Beispiel einen Permanentmagneten.

Beispielsweise sind mehrere magnetische Läufer vorgesehen.

Gemäß einer weiteren Ausführungsform ist vorgesehen, dass eine Positionserfassungseinrichtung zum Erfassen einer Position eines magnetischen Läufers vorgesehen ist, wobei das oder die mehreren Kriterien umfassen, dass die erfasste Position des magnetischen Läufers nicht den entsprechenden Antriebsspulen gegenüberliegt.

Dadurch wird zum Beispiel der technische Vorteil bewirkt, dass der Linearmotor effizient betrieben werden kann. Insbesondere wird dadurch der technische Vorteil bewirkt, dass sichergestellt werden kann, dass nur Antriebsspulen verwendet werden, um die überschüssige Energie aus dem Zwischenkreis abzuführen, die momentan nicht den magnetischen Läufer antreiben.

Dadurch wird zum Beispiel der technische Vorteil bewirkt, dass eine Bewegung des magnetischen Läufers aufgrund des Abführens der überschüssigen Energie aus dem Zwischenkreis nicht gestört wird.

In einer Ausführungsform ist vorgesehen, dass das lineare Antriebssystem ausgebildet oder eingerichtet ist, das Verfahren zum Betreiben einer Statorvorrichtung aus- oder durchzuführen.

In einer Ausführungsform ist vorgesehen, dass die Statorvorrichtung gemäß dem Verfahren zum Betreiben einer Statorvorrichtung von dem linearen Antriebssystem umfasst ist. Dann kann das Verfahren zum Betreiben einer Statorvorrichtung auch als ein Verfahren zum Betreiben eines linearen Antriebssystems bezeichnet werden.

Nach einer Ausführungsform ist vorgesehen, dass die Statorvorrichtung ausgebildet oder eingerichtet ist, das Verfahren zum Betreiben einer Statorvorrichtung aus- oder durchzuführen.

Technische Funktionalitäten des Verfahrens zum Betreiben einer Statorvorrichtung ergeben sich analog aus entsprechenden technischen Funktionalitäten der Statorvorrichtung und umgekehrt. Das heißt also insbesondere, dass sich entsprechende Verfahrensmerkmale aus entsprechenden Statorvorrichtungsmerkmalen und umgekehrt ergeben.

Technische Funktionalitäten des linearen Antriebssystems ergeben sich analog aus entsprechenden technischen Funktionalitäten der Statorvorrichtung respektive des Verfahrens zum Betreiben einer Statorvorrichtung und umgekehrt.

Ein Linearmotor im Sinne der Beschreibung umfasst insbesondere die Statorvorrichtung und einen magnetischen Läufer oder mehrere magnetische Läufer respektive einen Magneten als Läufer respektive mehrere Magneten als Läufer. Läufer umfassend einen Magneten, magnetische Läufer und Magnete als Läufer können im Sinne dieser Beschreibung synonym verwendet werden.

Der Läufer ist beim linearen Antriebssystem am Schlitten angeordnet. Bei Bestromung der Antriebsspulen erzeugen diese ein Magnetfeld, welches mit dem Magnetfeld des Läufers wechselwirkt, so dass dadurch entweder eine anziehende oder abstoßende Kraft resultiert, die den Läufer entweder an die Spule anziehet oder von dieser abstößt. Dadurch kann der Schlitten angetrieben oder abgebremst werden.

Die Formulierung "respektive" umfasst insbesondere die Formulierung "und/oder".

Ein Magnet im Sinne der Beschreibung ist beispielsweise ein Permanentmagnet.

In einer Ausführungsform ist vorgesehen, dass an dem Zwischenkreis ein Gleichrichter angeschlossen ist.

In einer Ausführungsform ist vorgesehen, dass an dem Gleichrichter eine Wechselspannungsquelle oder eine Wechselstromquelle angeschlossen ist. Beispielsweise ist eine dreiphasige Stromquelle an dem Gleichrichter angeschlossen.

In einer Ausführungsform ist vorgesehen, dass die Steuerungseinrichtung ausgebildet ist, den zumindest einen der Gleichspannungswandler derart anzusteuern, dass das Einspeisen der elektrischen Energie aus dem Zwischenkreis in die dem angesteuerten Gleichspannungswandler entsprechende Antriebsspule beendet wird, wenn die gemessene Zwischenkreisspannung kleiner oder kleiner-gleich einem vorbestimmten weiteren Zwischenkreisspannungsschwellwert ist. Der weitere Zwischenkreisspannungsschwellwert ist kleiner als der vorbestimmte Zwischenkreisspannungsschwellwert. Das heißt also beispielsweise, dass das Abführen der überschüssigen Energie vorzugsweise dann beendet wird, wenn die gemessene Zwischenkreisspannung kleiner oder kleiner-gleich dem vorbestimmten weiteren Zwischenkreisspannungsschwellwert ist.

Die Erfindung wird im Folgenden anhand von bevorzugten Ausführungsbeispielen näher erläutert. Hierbei zeigen
- Fig. 1: einen zeitlichen Spannungsverlauf einer Zwischenkreisspannung,
- Fig. 2: eine Statorvorrichtung für einen Linearmotor,
- Fig. 3: zeitliche Verläufe einer Zwischenkreisspannung und eines Gesamtstroms einer Einspeisung in mehrere Antriebsspulen einer Statorvorrichtung,
- Fig. 4: ein lineares Antriebssystem und

- Fig. 5: ein Ablaufdiagramm eines Verfahrens zum Betreiben einer Statorvorrichtung für einen Linearmotor.

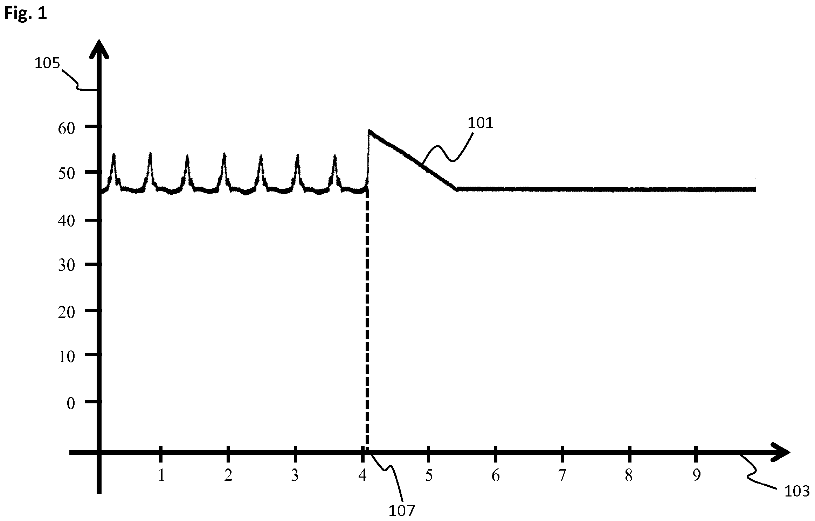

Fig. 1 zeigt einen zeitlichen Verlauf 101 einer Zwischenkreisspannung bei einem linearen Antriebssystem.

Die Abszisse ist mit dem Bezugszeichen 103 gekennzeichnet und gibt die Zeit in Sekunden an.

Die Ordinate ist mit dem Bezugszeichen 105 gekennzeichnet und gibt die Zwischenkreisspannung in Volt an.

Zwischen 0 Sekunden und 4 Sekunden werden mehrere Bremsvorgänge eines Schlittens des Antriebssystems durchgeführt, was eine Rückspeisung von Energie auf den Zwischenkreis zur Folge hat. Diese Rückspeisung von Energie äußert sich in einem Anstieg der Zwischenkreisspannung.

Zwischen 0 Sekunden und 4 Sekunden ist eine externe Chopper-Vorrichtung aktiv. Diese führt die überschüssige Energie aus dem Zwischenkreis ab.

Nach der vierten Sekunde wird die Chopper-Vorrichtung abgeschaltet, so dass es bei einem weiteren Bremsen des Schlittens zu einer Überspannung im Zwischenkreis kommt. Der Zeitpunkt, zu welchem die Zwischenkreisspannung sprunghaft ansteigt, ist in Fig. 1 mit dem Bezugszeichen 107 gekennzeichnet.

Diese Überspannung wird in der Regel erkannt oder detektiert, was ein Abschalten des Linearmotors aus Sicherheitsgründen zur Folge hat. Dadurch resultiert eine Ausfallzeit des linearen Antriebssystems.

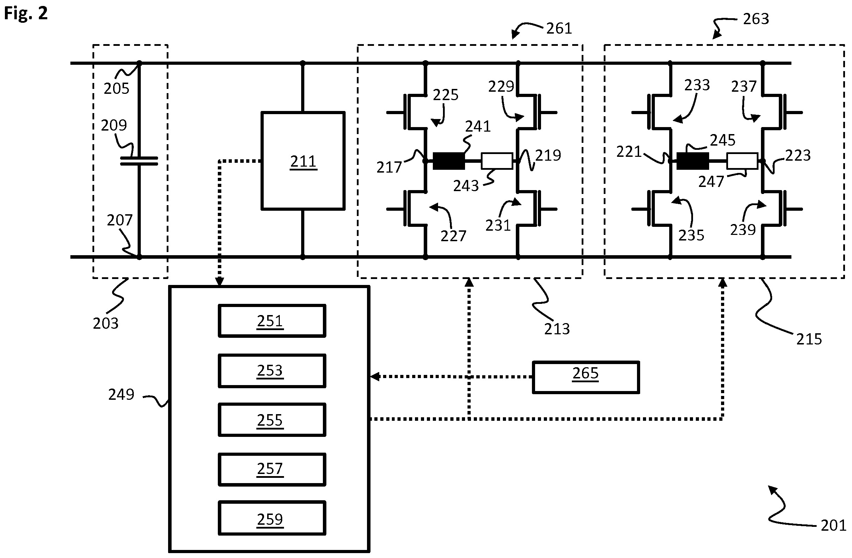

Fig. 2 zeigt eine Schaltungsanordnung einer Statorvorrichtung 201 für einen Linearmotor.

Die Statorvorrichtung 201 umfasst einen Zwischenkreis 203. Der Zwischenkreis 203 umfasst einen ersten Schaltungsknoten 205 und einen zweiten Schaltungsknoten 207. Zwischen dem ersten Schaltungsknoten 205 und dem zweiten Schaltungsknoten 207 ist ein Kondensator 209 geschaltet, der auch als ein Zwischenkreiskondensator bezeichnet werden kann.

Die Statorvorrichtung 201 umfasst eine Spannungsmesseinrichtung 211 zum Messen einer elektrischen Zwischenkreisspannung. Die Spannungsmesseinrichtung 211 ist parallel zum Kondensator 209 zwischen dem ersten Schaltungsknoten 205 und dem zweiten Schaltungsknoten 207 geschaltet.

Die Statorvorrichtung 201 umfasst eine erste Brückenschaltung 213 und eine zweite Brückenschaltung 215.

Die erste Brückenschaltung 213 umfasst einen dritten Schaltungsknoten 217 und einen vierten Schaltungsknoten 219.

Die zweite Brückenschaltung 215 umfasst einen fünften Schaltungsknoten 221 und einen sechsten Schaltungsknoten 223.

Die erste Brückenschaltung 213 umfasst einen ersten Transistor 225, einen zweiten Transistor 227, einen dritten Transistor 229 und einen vierten Transistor 231.

Die zweite Brückenschaltung 215 umfasst einen fünften Transistor 233, einen sechsten Transistor 235, einen siebenten Transistor 237 und einen achten Transistor 239.

Die Transistoren der beiden Brückenschaltungen 213, 215 sind beispielsweise beispielhafte Platzhalter für Halbleiterschaltelemente. In weiteren Ausführungsformen sind die Transistoren der Brückenschaltungen 213, 215 jeweils Bipolartransistoren oder Metall-Oxid-Halbleiter-Feldeffekttransistoren. Die Transistoren der beiden Brückenschaltungen 213, 215 übernehmen also insbesondere die Funktion eines Halbleiterschaltelements und sind beispielsweise Bipolartransistoren oder Metall-Oxid-Halbleiter-Feldeffekttransistoren.

Die Transistoren der beiden Brückenschaltungen 213, 215 sind beispielsweise identisch ausgebildet oder beispielsweise unterschiedlich ausgebildet.

Ein Transistor im Sinne der Beschreibung ist beispielsweise ein Bipolartransistor oder ein Metall-Oxid-Halbleiter-Feldeffekttransistor (MosFET) oder ein SiC-/GaN-FET.

Die erste Brückenschaltung 213 umfasst eine erste Antriebsspule 241. Die erste Antriebsspule 241 ist zwischen dem dritten Schaltungsknoten 217 und dem vierten Schaltungsknoten 219 geschaltet.

Die erste Antriebsspule 241 weist einen ersten Innenwiderstand auf, der gemäß einem Ersatzschaltbild als Widerstand 243 zwischen der ersten Antriebsspule 241 und dem vierten Schaltungsknoten 219 geschaltet ist.

Das heißt also, dass gemäß dem Ersatzschaltbild zwischen dem dritten Schaltungsknoten 217 und dem vierten Schaltungsknoten 219 die erste Antriebsspule 241 und der erste Innenwiderstand 243 in Reihe geschaltet sind.

Die zweite Brückenschaltung 215 umfasst eine zweite Antriebsspule 245. Die zweite Antriebsspule 245 ist zwischen dem fünften Schaltungsknoten 221 und dem sechsten Schaltungsknoten 223 geschaltet.

Die zweite Antriebsspule 245 weist einen zweiten Innenwiderstand auf, der gemäß einem Ersatzschaltbild als Widerstand 247 zwischen der zweiten Antriebsspule 245 und dem sechsten Schaltungsknoten 223 geschaltet ist.

Das heißt also, dass gemäß dem Ersatzschaltbild zwischen dem fünften Schaltungsknoten 221 und dem sechsten Schaltungsknoten 223 die zweite Antriebsspule 245 und der zweite Innenwiderstand 247 in Reihe geschaltet sind.

Ein Kollektor des ersten Transistors 225 der ersten Brückenschaltung 213 ist mit dem ersten Schaltungsknoten 205 verbunden. Ein Emitter des ersten Transistors 225 der ersten Brückenschaltung 213 ist mit dem dritten Schaltungsknoten 217 verbunden.

Sofern beispielhaft ein MosFET als einer der Transistoren verwendet ist, so soll in den vorstehenden Ausführungen und in den nachstehenden Ausführungen der Begriff "Kollektor" durch "Drain" und so soll der Begriff "Emitter" durch "Source" ersetzt werden.

Ein Kollektor des zweiten Transistors 227 der ersten Brückenschaltung 213 ist mit dem dritten Schaltungsknoten 217 verbunden. Ein Emitter des zweiten Transistors 227 der ersten Brückenschaltung 213 ist mit dem zweiten Schaltungsknoten 207 verbunden.

Ein Kollektor des dritten Transistors 229 der ersten Brückenschaltung 213 ist mit dem ersten Schaltungsknoten 205 verbunden. Ein Emitter des dritten Transistors 229 der ersten Brückenschaltung 213 ist mit dem vierten Schaltungsknoten 219 verbunden.

Ein Kollektor des vierten Transistors 231 der ersten Brückenschaltung 213 ist mit dem vierten Schaltungsknoten 219 verbunden. Ein Emitter des vierten Transistors 231 der ersten Brückenschaltung 213 ist mit dem zweiten Schaltungsknoten 207 verbunden.

Ein Kollektor des fünften Transistors 233 der zweiten Brückenschaltung 215 ist mit dem ersten Schaltungsknoten 205 verbunden. Ein Emitter des fünften Transistors 233 der zweiten Brückenschaltung 215 ist mit dem fünften Schaltungsknoten 221 verbunden.

Ein Kollektor des sechsten Transistors 235 der zweiten Brückenschaltung 215 ist mit dem fünften Schaltungsknoten 221 verbunden. Ein Emitter des sechsten Transistors 235 der zweiten Brückenschaltung 215 ist mit dem zweiten Schaltungsknoten 207 verbunden.

Ein Kollektor des siebenten Transistors 237 der zweiten Brückenschaltung 215 ist mit dem ersten Schaltungsknoten 205 verbunden. Ein Emitter des siebenten Transistors 237 der zweiten Brückenschaltung 215 ist mit dem sechsten Schaltungsknoten 223 verbunden.

Ein Kollektor des achten Transistors 239 der zweiten Brückenschaltung 215 ist mit dem sechsten Schaltungsknoten 223 verbunden. Ein Emitter des achten Transistors 239 der zweiten Brückenschaltung 215 ist mit dem zweiten Schaltungsknoten 207 verbunden.

Ein Verbinden oder eine Verbindung im Sinne der Beschreibung ist insbesondere ein elektrisches Verbinden respektive eine elektrische Verbindung respektive ein elektrisch leitfähiges Verbinden respektive eine elektrisch leitfähige Verbindung.

Die beiden Brückenschaltungen 213, 215 sind jeweils als Vollbrücke oder als H-Brücke ausgebildet. Die beiden Antriebsspulen 241, 245 bilden jeweils einen Brückenzweig der beiden Brückenschaltungen 213, 215.

In einer nicht gezeigten Ausführungsform ist anstelle der Vollbrücken eine Schaltung von Halbbrücken als Brückenschaltung vorgesehen.

Die vier Transistoren 225, 227, 229, 231 der ersten Brückenschaltung 213 bilden einen ersten Gleichspannungswandler 261, der die erste Antriebsspule 241 mit dem Zwischenkreis 203 elektrisch leitfähig verbindet.

Die vier Transistoren 233, 235, 237, 239 der zweiten Brückenschaltung 215 bilden einen zweiten Gleichspannungswandler 263. der die zweite Antriebsspule 245 mit dem Zwischenkreis 203 elektrisch leitfähig verbindet.

An den Zwischenkreis 203 kann beispielsweise ein Gleichrichter (nicht gezeigt) angeschlossen werden, der beispielsweise mittels einer dreiphasigen Spannungs- oder Stromquelle verbunden ist.

Die Statorvorrichtung 201 umfasst ferner eine Steuerungseinrichtung 249. Die Steuerungseinrichtung 249 umfasst mehrere Funktionen, die durch Kästchen symbolisch dargestellt sind.

So ist die Steuerungseinrichtung 249 ausgebildet, die gemessene Zwischenkreisspannung zu überwachen. Die Steuerungseinrichtung 249 weist also eine Spannungsüberwachungsfunktion 251 auf. Beispielsweise umfasst die Steuerungseinrichtung 249 eine Spannungsüberwachungseinheit zum Überwachen der gemessenen elektrischen Zwischenkreisspannung.

Die Steuerungseinrichtung 249 ist ferner ausgebildet, eine Regleranforderung zum Regeln der Antriebsspulen 241, 245 zu überwachen. Das heißt also, dass die Steuerungseinrichtung 249 eine Regleranforderungsüberwachungsfunktion 253 aufweist.

Die Regleranforderungsüberwachungsfunktion 253 bewirkt, dass überwacht wird, welche der Antriebsspulen 241, 245 für eine Regelung eines Antriebs eines magnetischen Läufers, der von einem anzutreibenden Schlitten umfasst ist, angefordert wird respektive in Benutzung ist. Es wird also insbesondere überwacht, welche der Antriebsspulen 241, 245 momentan verwendet werden, um einen Schlitten anzutreiben.

Die Steuerungseinrichtung 249 ist ferner ausgebildet, ungenützte Brückenschaltungen 213, 215 zu identifizieren. Das heißt also, dass die Steuerungseinrichtung 249 eine Identifikationsfunktion 255 zum Identifizieren ungenutzter Vollbrücken aufweist. Beispielsweise umfasst die Steuerungseinrichtung 249 eine Identifikationseinheit zur Identifikation ungenutzter Vollbrücken oder Brückenschaltungen.

Das heißt also, dass die Steuerungseinrichtung 249 diejenigen der Brückenschaltungen 213, 215 identifiziert, die momentan nicht genutzt werden, also ungenutzt sind, also insbesondere nicht für einen Antrieb eines Schlittens genutzt werden.

Die Steuerungseinrichtung 249 ist ferner ausgebildet, die Antriebsspulen 241, 245 thermisch zu überwachen. Das heißt also, dass die Steuerungseinrichtung 249 eine thermische Überwachungsfunktion 257 für eine thermische Überwachung der Antriebsspulen 241, 245 aufweist. Beispielsweise umfasst die Steuerungseinrichtung 249 eine thermische Überwachungseinheit zum Überwachen der thermischen Belastung der Antriebsspulen 241, 245. Eine thermische Überwachung umfasst insbesondere ein Überwachen einer momentanen thermischen Belastung.

Das heißt also insbesondere, dass die Steuerungseinrichtung 249 eine momentane thermische Belastung der Antriebsspulen 241, 245 ermittelt. Beispielsweise basiert das Ermitteln der momentanen thermischen Belastung auf einem thermischen Modell. Als Eingangsgröße für das thermische Modell ist beispielsweise ein vergangener Antriebsspulenstrom vorgesehen. Das heißt also, dass basierend auf einem vergangenen Antriebsspulenstrom ermittelt wird, wie hoch eine momentane thermische Belastung der entsprechenden Antriebsspule ist.

Die Steuerungseinrichtung 249 ist ferner ausgebildet, eine Wirkstromanforderung zu erzeugen. Das heißt also insbesondere, dass die Steuerungseinrichtung 249 eine Wirkstromanforderungserzeugungsfunktion 259 aufweist. Beispielsweise umfasst die Steuerungseinrichtung 249 eine Wirkstromanforderungserzeugungseinheit.

Das heißt also, dass die Steuerungseinrichtung 249 eine Anforderung erzeugt, die einen elektrischen Wirkstrom anfordert. Diese Anforderung gibt also vor, welche der Antriebsspulen 241, 245 mit einem elektrischen Wirkstrom gespeist werden sollen, um eine überschüssige elektrische Energie aus dem Zwischenkreis 203 in die entsprechende Antriebsspule abzuführen.

Die Steuerungseinrichtung 249 ist beispielsweise als eine numerische Steuerungseinrichtung ausgebildet.

Das heißt also insbesondere, dass die Steuerungseinrichtung 249 im Betrieb der Statorvorrichtung 201, die beispielsweise von einem linearen Antriebssystem umfasst ist, die elektrische Zwischenkreisspannung überwacht. Sofern die gemessene elektrische Zwischenkreisspannung einen vorbestimmten Zwischenkreisspannungsschwellwert übersteigt, wird zumindest eine der Antriebsspulen 241, 245 verwendet, um die überschüssige Energie aus dem Zwischenkreis 203 abzuführen, indem die entsprechenden Antriebsspulen mit einem elektrischen Strom, der Wirkstrom, gespeist werden. Das heißt also, dass beispielsweise ein elektrischer Gleichstrom (, der ein Wirkstrom ist,) auf die entsprechenden Antriebsspulen 241, 245 aufgeprägt wird.

Um diejenige Antriebsspule als die Antriebsspule zu bestimmen, in die die überschüssige elektrische Energie eingespeist werden soll, ist vorgesehen, dass diejenigen Antriebsspulen von der Einspeisung der überschüssigen Energie ausgeschlossen werden, die momentan für eine Regelung eines Antriebs eines Schlittens des linearen Antriebssystems verwendet werden. Es werden also insbesondere diejenigen Brückenschaltungen 213, 215 identifiziert, die momentan nicht für einen Antrieb eines Schlittens benötigt werden.

Ferner ist vorgesehen, dass nur diejenigen Antriebsspulen 241, 245 verwendet werden, um die überschüssige Energie abzuführen, deren thermische Belastung kleiner als ein vorbestimmter thermischer Belastungsschwellwert ist.

Ferner wird basierend auf der gemessenen Zwischenkreisspannung ein Wirkstrom ermittelt, der nötig ist, um die überschüssige Energie aus dem Zwischenkreis 203 abzuführen. Dieser ermittelte Wirkstrom wird beispielsweise auf die Antriebsspulen 241, 245 aufgeteilt, um über beide Antriebsspulen 241, 245 die überschüssige Energie abzuführen.

Dadurch, dass die Antriebsspulen 241, 245 jeweils über einen eigenen Gleichspannungswandler, hier die jeweiligen vier Transistoren, mit dem Zwischenkreis 203 elektrisch leitfähig verbunden sind, wird insbesondere der technische Vorteil bewirkt, dass der elektrische Wirkstrom, der auf die einzelnen Spulen 241, 245 eingeprägt werden kann, unabhängig voneinander geregelt werden kann. Das heißt also, dass für jede der Antriebsspulen 241, 245 unabhängig voneinander ein bestimmter elektrischer Wirkstrom geregelt werden kann, um entsprechend elektrische Energie aus dem Zwischenkreis 203 abzuführen. Somit bildet also eine Brückenschaltung 213, 215 ein 1-phasiges System. Dies ist insbesondere im Gegensatz zu dem in der Beschreibungseinleitung genannten Stand der Technik zu sehen, der in der Regel dreiphasige Systeme mit über einem Motor verketteten Halbbrücken zeigt. Die Antriebsspulen 241, 245 sind somit jeweils in den Brückenschaltungen integriert, also in den Gleichspannungswandlern integriert.

Somit sind entsprechend der Anzahl der Antriebsspulen mehrere unabhängige 1-Phasen-Systeme gebildet, bei denen ein jedes Vollbrücken-System (also jede Brückenschaltung) unabhängig von den anderen Phasen geregelt werden kann.

Durch die Steuerungseinrichtung 249 ist es insbesondere ermöglicht, die unabhängigen 1-Phasen-Systeme miteinander zu verkoppeln, um lokal n-phasige Systeme zu erzeugen. So ist es insbesondere ermöglicht, dass bei einem solch verkoppelten System beispielsweise alle drei Phasen eines beispielhaften 3-phasigen Systems unabhängige Ströme führen können. Hier stellt beispielsweise eine Software sicher, die auf der Steuerungseinrichtung 249 ausgeführt wird, dass im Regelbetrieb die Phasenbeziehungen eingehalten werden, wenn die Schlitten angetrieben werden sollen.

Für den Chopper-Betrieb, also im Bremsbetrieb bei Rückspeisung von elektrischer Energie, ist dies in der Regel nicht relevant, da dort nur einzelne, vorab als geeignet identifizierte Vollbrücken als unabhängige 1-Phasen-Systeme genutzt werden.

Im Chopper-Betrieb befindet sich beispielsweise kein bewegliches Teil, also kein Schlitten, in Regelung über den identifizierten 1-Phasen-Systemen, so dass der überspannungsabhängige Strom durch den Innenwiderstand 243, 247 der Antriebsspulen 241, 245 als reiner elektrischer Wirkstrom angenommen werden kann. Im Chopper-Betrieb oder Chopper-Modus wird also ein überspannungsabhängiger Gleichstrom durch den Innenwiderstand 243, 247 der in der Vollbrücke angebrachten Antriebsspule 241, 245 geregelt.

Die hierfür geeigneten Vollbrücken oder Brückenschaltungen werden durch die Steuerungseinrichtung 249 anhand von einem oder mehreren Kriterien identifiziert.

Ein Kriterium ist eine geringe Auslastung des thermischen Modells der einzelnen Antriebsspulen. Das heißt also, dass die entsprechende thermische Belastung einer Antriebsspule kleiner-gleich einem vorbestimmten thermischen Belastungsschwellwert sein muss, damit eine solche Antriebsspule verwendet wird, um den überspannungsabhängigen Strom in diese einzuprägen.

Ein weiteres Kriterium ist, dass keine Regleranforderung für die entsprechende Brückenschaltung respektive Antriebsspule vorliegt. Das heißt also, dass die entsprechende Antriebsspule momentan nicht verwendet wird, um einen Schlitten anzutreiben.

Beispielsweise sind gemäß einer Ausführungsform mehrere Brückenschaltungen in einem gemeinsamen Modul mechanisch integriert, wobei beispielsweise bei einer erkannten Überspannung im Zwischenkreis alle Brückenschaltungen des Moduls als geeignet zur Abführung der überschüssigen Energie identifiziert werden können, so dass beispielsweise in allen Antriebsspulen des Moduls derselbe spannungsabhängige Gleichstrom ausgeregelt werden kann.

Das heißt also insbesondere, dass Antriebsspulen, deren thermische Belastung gleich oder größer-gleich dem vorbestimmten thermischen Belastungsschwellwert ist, nicht verwendet werden, um die überschüssige Energie durch Ausregelung eines spannungsabhängigen Gleichstroms aus dem Zwischenkreis abzuführen.

Die Statorvorrichtung 201, wie sie in Fig. 2 gezeigt ist, weist beispielhaft zwei Brückenschaltungen 213, 215 auf. In weiteren nicht gezeigten Ausführungsbeispielen sind mehr als zwei Brückenschaltungen vorgesehen, die beispielsweise analog zu den Brückenschaltungen 213, 215 ausgebildet sind und an dem ersten Schaltungsknoten 205 und an dem zweiten Schaltungsknoten 207 angeschlossen sind respektive mit diesen Schaltungsknoten 205, 207 verbunden sind.

Bei einem linearen Antriebssystem sind die Antriebsspulen 241, 245 entlang einer Laufschiene angeordnet. Auf einer solchen Laufschiene ist ein Schlitten oder sind mehrere Schlitten beweglich angeordnet. An den Schlitten ist jeweils ein Magnet als Läufer angeordnet, so dass die Statorvorrichtung gemeinsam mit dem Läufer einen Linearmotor bildet, der den oder die Schlitten antreiben kann.

Hierfür ist vorgesehen, dass in die einzelnen Antriebsspulen 241, 245 ein elektrischer Gleichstrom eingeprägt wird, der dazu führt, dass sich ein Magnetfeld ausbildet, welches mit dem Magnetfeld des Magneten des Läufers wechselwirkt und hierüber den Schlitten antreiben oder bremsen kann.

Die Statorvorrichtung 201 umfasst ferner eine optionale Positionserfassungseinrichtung 265 zum Erfassen einer Position eines magnetischen Läufers, wobei das oder die mehreren Kriterien umfassen, dass die erfasste Position des magnetischen Läufers nicht den entsprechenden Antriebsspulen 241, 245 gegenüberliegt. Die Positionserfassungseinrichtung 265 übermittelt also die erfasste Position an die Steuerungseinrichtung 249.

In einer nicht gezeigten Ausführungsform ist die Positionserfassungseinrichtung 265 nicht vorgesehen.

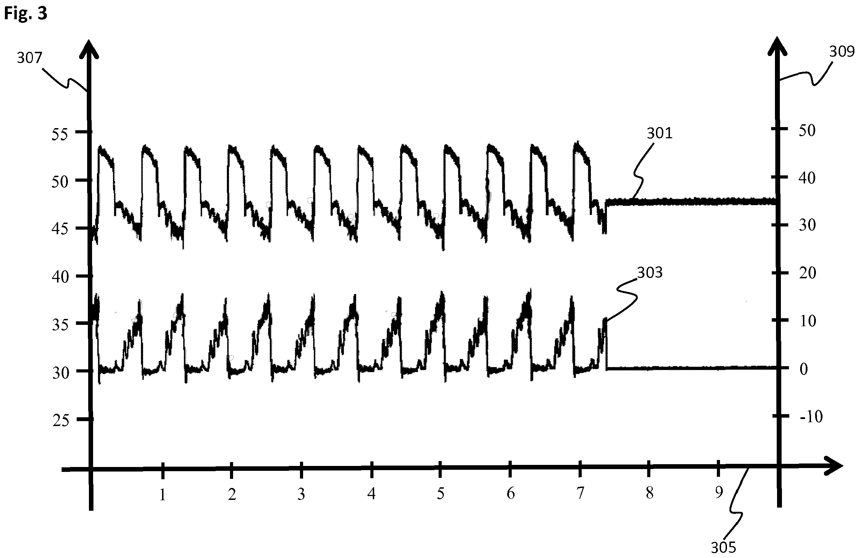

Fig. 3 zeigt einen zeitlichen Verlauf 301 einer Zwischenkreisspannung sowie einen zeitlichen Verlauf 303 eines Gesamtstroms der Einspeisung in Antriebsspulen einer Statorvorrichtung.

Die Abszisse ist mit dem Bezugszeichen 305 gekennzeichnet und gibt die Zeit in Sekunden an.

Die linke Ordinate ist mit dem Bezugszeichen 307 gekennzeichnet und gibt die elektrische Zwischenkreisspannung in Volt an.

Die rechte Ordinate ist mit dem Bezugszeichen 309 gekennzeichnet und gibt den elektrischen Gesamtstrom der Einspeisung in Ampere an.

Die beiden zeitlichen Verläufe 301, 303 wurden gemessen für 17 Schlitten mit jeweils 2 kg Zuladung, wobei die Schlitten im Reversierbetrieb verfahren wurden. Die Geschwindigkeit der Schlitten lag bei etwa 3 m/s bei entsprechend hoher Beschleunigung. Es wurde keine externe Chopper-Vorrichtung verwendet.

Durch den Reversierbetrieb wird elektrische Energie zurück in den Zwischenkreis gespeist, was eine Zwischenkreisspannung erhöht. Dieses "zu viel" an elektrischer Energie wird dann wieder aus dem Zwischenkreis in Antriebsspulen abgeführt, so wie es vor und/oder nachstehend beschrieben ist. Die Verläufe 301, 303 zeigen, dass durch die erfindungsgemäße Steuerung durch die Steuerungseinrichtung es in vorteilhafter Weise ermöglicht ist, dass die Zwischenkreisspannung stets unter 55 Volt bleibt, obwohl keine externe Chopper-Vorrichtung zum Abführen der überschüssigen Energie verwendet wird.

Der Gesamtstrom der Einspeisung bezeichnet hier die Summe der einzelnen elektrischen Gleichströme, die in die Antriebsspulen zwecks Abführung der überschüssigen elektrischen Energie aus dem Zwischenkreis eingeprägt wurden.

Die Erfindung sieht also insbesondere vor, einen integrierten (in die Brückenschaltungen integrierten) Chopper-Mechanismus zu verwenden, der auf der Idee basiert, die nicht zum Antrieb genutzten Vollbrücken zur Abführung der überschüssigen Energie aus dem Zwischenkreis zu nutzen. Weiter ist beispielsweise vorgesehen, die nach einem thermischen Modell bereits stark thermisch belasteten Vollbrücken vom Chopper-Mechanismus auszuschließen. Alle übrigen, nicht genutzten Brückenschaltungen mit ihren entsprechenden Antriebsspulen der Statorvorrichtung werden beispielsweise für den erfindungsgemäßen Chopper-Mechanismus genutzt.

Der Chopper-Mechanismus wird bei Überschreiten einer fest definierten oberen Grenze (vorbestimmter Zwischenkreisspannungsschwellwert) der Zwischenkreisspannung, beispielsweise 53,0 Volt, aktiviert.

Auf den für den Chopper-Mechanismus verwendeten Vollbrücken wird ein zur Überspannung des Zwischenkreises proportionaler elektrischer Gleichstrom ausgeregelt, so dass die rückgespeiste Energie im Innenwiderstand der ungenutzten Antriebsspulen abgebaut und eine starke Überhöhung der Zwischenkreisspannung effektiv und effizient verhindert wird. Beispielsweise ist vorgesehen, dass bei Unterschreiten einer definierten unteren Grenze der Zwischenkreisspannung (ein vorbestimmter weiterer Zwischenkreisspannungsschwellwert) der integrierte Chopper-Mechanismus deaktiviert wird.

Das heißt also, dass, sofern die Zwischenkreisspannung kleiner oder kleiner-gleich dem vorbestimmten weiteren Zwischenkreisspannungsschwellwert, beispielsweise 52,5 V, ist, das Ansteuern des zumindest einen der Gleichspannungswandler derart, dass elektrische Energie aus dem Zwischenkreis in die dem angesteuerten Gleichspannungswandler entsprechende Antriebsspule eingespeist wird, beendet wird.

Der integrierte Chopper-Mechanismus hat vorteilhafterweise keinen Einfluss auf die Schlitten, da dieser nur auf nicht verwendeten Brückenschaltungen respektive Antriebsspulen ausgelöst wird. Werden für den integrierten Chopper-Mechanismus genutzte Antriebsspulen wieder für die Regelung eines Antriebs eines Schlittens benötigt, wird der Chopper-Mechanismus für diese Antriebsspulen deaktiviert.

Erfindungsgemäße Vorteile sind insbesondere in einem effektiven Schutz vor starker Überhöhung der Zwischenkreisspannung zu sehen. Dadurch kann beispielsweise ein Brückentreiber vor einer Überspannung geschützt werden. Beispielsweise kann dadurch ein Überspannungsfehler respektive können mehrere Überspannungsfehler beim Abbremsen eines Schlittens vermieden werden.

Ein weiterer erfindungsgemäßer Vorteil ist insbesondere in einer schnelleren Reaktion auf eine auftretende Überspannung im Zwischenkreis zu sehen verglichen mit einer externen Chopper-Vorrichtung.

Ferner wird dadurch der technische Vorteil bewirkt, dass eine externe Chopper-Vorrichtung entlastet werden kann. Insbesondere kann dadurch eine externe Chopper-Vorrichtung eingespart werden.

Es wird somit eine Überhöhung der Zwischenkreisspannung in einem Modul, in welchem mehrere Brückenschaltungen mechanisch befestigt sind, effektiv oder effizient verhindert, wobei dies insbesondere leitungslängenunabhängig ist.

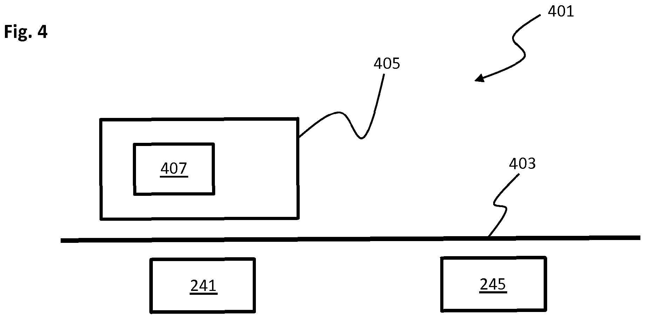

Fig. 4 zeigt ein lineares Antriebssystem 401 in einer schematisch vereinfacht dargestellten Ansicht.

Das lineare Antriebssystem 401 umfasst eine Laufschiene 403, auf welcher ein Schlitten 405 beweglich angeordnet ist. Beispielsweise sind mehrere Schlitten 405 vorgesehen, die beweglich auf der Laufschiene 403 angeordnet sind.

Beispielsweise umfasst der Schlitten 405 eine oder mehrere Laufrollen. Die Laufschiene 403 umfasst zum Beispiel eine oder mehrere Laufflächen, auf welchen die Laufrollen des Schlittens 405 abrollen können.

Der Schlitten 405 umfasst einen Magneten 407, beispielsweise einen Permanentmagneten. Beispielsweise umfasst der Schlitten 405 mehrere Magneten 407.

Das lineare Antriebssystem 401 umfasst die Statorvorrichtung 201 der Fig. 2, wobei der Übersicht halber lediglich die Antriebsspulen 241, 245 gezeichnet sind. Die beiden Antriebsspulen 241, 245 sind entlang der Laufschiene 403 angeordnet.

Gemeinsam mit dem Magneten 407 bildet die Statorvorrichtung einen Linearmotor, welcher den Schlitten 405 antreiben kann.

Bei Bestromung der Antriebsspulen 241, 245 bildet sich ein magnetisches Feld aus, welches mit dem magnetischen Feld des Magneten 407 wechselwirkt, so dass hierüber ein Antrieb oder bei entsprechender Bestromung auch ein Bremsen des Schlittens 405 ermöglicht ist.

Sofern der Schlitten 405 gebremst wird, wird elektrische Energie in den Zwischenkreis 203 zurückgespeist. Sofern die Zwischenkreisspannung dadurch einen Wert annimmt, der größer oder größer-gleich einem vorbestimmten Zwischenkreisspannungsschwellwert ist, ist vorgesehen, dass die Steuerungseinrichtung 249 zumindest eine der Vollbrücken oder Brückenschaltungen 213, 215 derart ansteuert, dass ein überspannungsabhängiger Strom in die entsprechende Antriebsspule 241, 245 eingeprägt wird, um die überschüssige Energie aus dem Zwischenkreis 203 abzuführen. Hierbei ist vorgesehen, dass nur diejenige Antriebsspule verwendet wird, die momentan nicht zum Antrieb oder zum Bremsen des Schlittens 405 verwendet wird.

In Fig. 4 ist der Schlitten 405 beispielhaft oberhalb der ersten Antriebsspule 241 angeordnet, so dass beispielsweise hier nur die zweite Antriebsspule 245 verwendet werden würde, um überschüssige Energie aus dem Zwischenkreis 203 abzuführen. Sofern sich dann der Schlitten 405 in seiner weiteren Bewegung oberhalb der zweiten Antriebsspule 245 befinden würde, würde nicht mehr die zweite Antriebsspule 245, sondern vielmehr die erste Antriebsspule 241 verwendet werden, um den überspannungsabhängigen Gleichstrom in diese einzuprägen, um die überschüssige Energie aus dem Zwischenkreis 203 abzuführen.

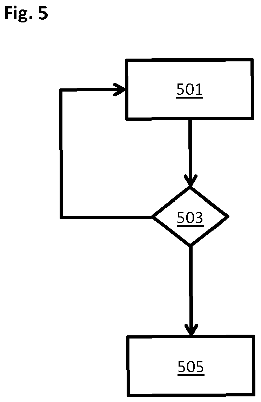

Fig. 5 zeigt ein Ablaufdiagramm eines Verfahrens zum Betreiben einer Statorvorrichtung für einen Linearmotor.

Beispielsweise ist der Linearmotor von einem linearen Antriebssystem umfasst.

Das Verfahren sieht in einem Schritt 501 vor, dass eine elektrische Zwischenkreisspannung mittels der Spannungsmesseinrichtung gemessen wird. In einem Schritt 503 wird die gemessene elektrische Zwischenkreisspannung mit einem vorbestimmten Zwischenkreisspannungsschwellwert verglichen.

Sofern die gemessene elektrische Zwischenkreisspannung kleiner dem vorbestimmten Zwischenkreisspannungsschwellwert ist, wird im Schritt 501 fortgesetzt.

Sofern die gemessene Zwischenkreisspannung größer oder größer-gleich dem vorbestimmten Zwischenkreisspannungsschwellwert ist, so ist in einem Schritt 505 vorgesehen, dass zumindest einer der Gleichspannungswandler mittels der Steuerungseinrichtung derart angesteuert wird, dass elektrische Energie aus dem Zwischenkreis in die dem angesteuerten Gleichspannungswandler entsprechende Antriebsspule eingespeist wird. Beispielsweise ist vorgesehen, dass die Gleichspannungswandler entsprechend so lange angesteuert werden, bis die gemessene elektrische Zwischenkreisspannung unter einen vorbestimmten weiteren Zwischenkreisspannungsschwellwert fällt.

## Patentansprüche

1. Antriebseinrichtung für einen Linearmotor (201; 407), umfassend:
mehrere Antriebsspulen (241, 245), die jeweils einen
Gleichspannungswandler (261, 263) aufweisen, wobei in die Antriebsspulen (241, 245) jeweils einzeln ein elektrischer Gleichstrom einprägbar ist, um ein Magnetfeld auszubilden, das mit dem Magnetfeld eines magnetischen Läufers (405) wechselwirken kann, um den magnetischen Läufer anzutreiben oder abzubremsen,
einen Zwischenkreis (203), der mit den Antriebsspulen (241, 245) jeweils mittels des Gleichspannungswandlers (261, 263) elektrisch leitfähig verbunden ist, so dass mittels des jeweiligen Gleichspannungswandlers (261, 263) elektrische Energie aus dem Zwischenkreis (203) in die jeweilige Antriebsspule (241, 245) oder elektrische Energie aus der jeweiligen Antriebsspule (241, 245) in den Zwischenkreis (203) eingespeist werden kann,
eine Spannungsmesseinrichtung (211) zum Messen einer elektrischen Zwischenkreisspannung, und
eine Steuerungseinrichtung (249) zum Steuern der Gleichspannungswandler (261, 263),wobei die Steuerungseinrichtung (249) ausgebildet ist, zumindest einen der Gleichspannungswandler (261, 263) derart anzusteuern, dass elektrische Energie aus dem Zwischenkreis (203) in die dem angesteuerten Gleichspannungswandler (261, 263) entsprechende Antriebsspule (241, 245) eingespeist wird,
wenn die von der der Spannungsmesseinrichtung (211) gemessene Zwischenkreisspannung größer oder größer-gleich einem vorbestimmten Zwischenkreisspannungsschwellwert ist, wobei die Steuerungseinrichtung (249) eine Spannungsüberwachungsfunktion (251) aufweist, um festzustellen, wenn die von der der Spannungsmesseinrichtung (211) gemessene Zwischenkreisspannung größer oder größer-gleich einem vorbestimmten Zwischenkreisspannungsschwellwert ist,
wobei die Steuerungseinrichtung (249) eine Regleranforderungsüberwachungsfunktion (253) umfasst, um festzustellen, welche Antriebsspulen (241, 245) momentan nicht verwendet werden, um den magnetischen Läufer anzutreiben oder abzubremsen,
wobei die Steuerungseinrichtung (249) eine thermische Überwachungsfunktion (257) umfasst, um festzustellen, ob eine thermische Belastung der Antriebsspulen (241, 245) kleiner als ein vorbestimmter thermischer Belastungsschwellwert ist, und
wobei die Steuerungseinrichtung (249) eine Wirkstromanforderungserzeugungsfunktion (259) umfasst, um zu ermitteln, welche der Antriebsspulen (241, 245) mit einem elektrischen Wirkstrom gespeist werden sollen, um die elektrische Energie aus dem Zwischenkreis (203) abzuführen, wobei diejenigen Antriebsspulen von der Einspeisung der Energie ausgeschlossen werden, die momentan für eine Regelung des Antriebs magnetischen Läufers verwendet werden und deren thermische Belastung größer als ein vorbestimmter thermischer Belastungsschwellwert ist, wobei die Steuerungseinrichtung (249) ausgebildet ist, den elektrische Wirkstrom, der in die einzelnen Antriebsspulen (241, 245) eingeprägt wird, unabhängig voneinander zu regeln.

2. Antriebseinrichtung nach Anspruch 1, wobei die Antriebsspulen (241, 245) und die entsprechenden eigenen Gleichspannungswandler (261, 263) jeweils als eine Brückenschaltung (213, 215) zusammengeschaltet sind, wobei die Antriebsspulen (241, 245) jeweils einen Brückenzweig der Brückenschaltung (213, 215) bilden, wobei die Steuerungseinrichtung (249) ausgebildet ist, diejenigen Brückenschaltungen (213, 215) zu identifizieren, die momentan nicht für einen Antrieb des magnetischen Läufers genutzt werden.

3. Antriebseinrichtung nach Anspruch 1 oder 2, wobei die Steuerungseinrichtung (249) ausgebildet ist, basierend auf einem vergangenen Antriebsspulenstrom zu ermitteln, wie hoch eine momentane thermische Belastung der entsprechenden Antriebsspule ist.

4. Antriebseinrichtung nach einem der Ansprüche 1 bis 3, wobei eine Positionserfassungseinrichtung (265) zum Erfassen einer Position des magnetischen Läufers (405) vorgesehen ist, und wobei diejenigen Antriebsspulen (241, 245) für die Einspeisung der Energie vorgesehen werden, die dem magnetischen Läufer nicht gegenüber liegen.

5. Lineares Antriebssystem (401), umfassend
die Antriebseinrichtung (201) nach einem der vorherigen Ansprüche,
eine Laufschiene (403), auf welcher ein oder mehrere Schlitten (405) beweglich angeordnet sind,
wobei der oder die Schlitten (405) jeweils einen Magnet
(407) als Läufer des Linearmotors umfassen,
wobei die Antriebsspulen (241, 245) entlang der Laufschiene (403) angeordnet sind.

6. Verfahren zum Betreiben einer Antriebseinrichtung für einen Linearmotor, umfassend mehrere Antriebsspulen (241, 245), die jeweils einen Gleichspannungswandler (261, 263) aufweisen, wobei in die Antriebsspulen (241, 245) jeweils einzeln ein elektrischer Gleichstrom einprägbar ist, um ein Magnetfeld auszubilden, das mit dem Magnetfeld eines magnetischen Läufers (405) wechselwirken kann, um den magnetischen Läufer anzutreiben oder abzubremsen, einen Zwischenkreis (203), der mit den Antriebsspulen (241, 245) jeweils mittels des Gleichspannungswandlers (261, 263) elektrisch leitfähig verbunden ist, so dass mittels des jeweiligen Gleichspannungswandlers (261, 263) elektrische Energie aus dem Zwischenkreis (203) in die jeweilige Antriebsspule (241, 245) oder elektrische Energie aus der jeweiligen Antriebsspule (241, 245) in den Zwischenkreis (203) eingespeist werden kann, eine Spannungsmesseinrichtung (211) zum Messen einer elektrischen Zwischenkreisspannung, und eine Steuerungseinrichtung (249) zum Steuern der Gleichspannungswandler (261, 263),umfassend die folgenden Schritte:
Messen (501) einer elektrischen Zwischenkreisspannung mittels der Spannungsmesseinrichtung (211),
Ansteuern (505) von zumindest einem Gleichspannungswandler (261, 263) mittels der Steuerungseinrichtung (249) derart, dass elektrische Energie aus dem Zwischenkreis (203) in die dem angesteuerten Gleichspannungswandler (261, 263) entsprechende Antriebsspule (241, 245) eingespeist wird, wenn die gemessene Zwischenkreisspannung größer oder größer-gleich einem vorbestimmten Zwischenkreisspannungsschwellwert ist,
wobei eine Spannungsüberwachungsfunktion (251) feststellt, wenn die von der der Spannungsmesseinrichtung (211) gemessene Zwischenkreisspannung größer oder größer-gleich einem vorbestimmten Zwischenkreisspannungsschwellwert ist,
wobei eine Regleranforderungsüberwachungsfunktion (253) feststellt, welche Antriebsspulen (241, 245) momentan nicht verwendet werden, um den magnetischen Läufer anzutreiben oder abzubremsen,
wobei eine thermische Überwachungsfunktion (257) feststellt, ob eine thermische Belastung der Antriebsspulen (241, 245) kleiner als ein vorbestimmter thermischer Belastungsschwellwert ist, und
wobei eine Wirkstromanforderungserzeugungsfunktion (259) ermittelt, welche der Antriebsspulen (241, 245) mit einem elektrischen Wirkstrom gespeist werden sollen, um die elektrische Energie aus dem Zwischenkreis (203) abzuführen, wobei diejenigen Antriebsspulen von der Einspeisung der Energie ausgeschlossen werden, die momentan für eine Regelung des Antriebs magnetischen Läufers verwendet werden und deren thermische Belastung größer als ein vorbestimmter thermischer Belastungsschwellwert ist
wobei der elektrische Wirkstrom, der in die einzelnen Antriebsspulen (241, 245) eingeprägt wird, unabhängig voneinander geregelt wird.

7. Verfahren nach Anspruch 6, wobei die Antriebsspulen (241, 245) und die entsprechenden eigenen Gleichspannungswandler (261, 263) jeweils als eine Brückenschaltung (213, 215) zusammengeschaltet sind, wobei die Antriebsspulen (241, 245) jeweils einen Brückenzweig der Brückenschaltung (213, 215) bilden, wobei diejenigen der Brückenschaltungen (213, 215) identifiziert werden, die momentan nicht für einen Antrieb des magnetischen Läufers genutzt werden.

8. Verfahren nach Anspruch 6 oder 7, wobei basierend auf einem vergangenen Antriebsspulenstrom ermittelt wird, wie hoch eine momentane thermische Belastung der entsprechenden Antriebsspule ist.

9. Verfahren nach einem der Ansprüche 6 bis 8, wobei eine Position des magnetischen Läufers (405) erfasst wird, wobei diejenigen Antriebsspulen für die Einspeisung der Energie vorgesehen werden, die dem magnetischen Läufer nicht gegenüber liegen.

## Claims

1. Drive device for a linear motor (201; 407), comprising:
multiple drive coils (241, 245) that each have a DC-to-DC converter (261, 263), wherein a direct electric current can be in each case individually injected into the drive coils (241, 245) in order to form a magnetic field that can interact with the magnetic field of a magnetic rotor (405) in order to drive or brake the magnetic rotor,
an intermediate circuit (203) that is electrically conductively connected to the drive coils (241, 245) in each case by means of the DC-to-DC converter (261, 263) such that electrical energy can be fed from the intermediate circuit (203) into the respective drive coil (241, 245), or electrical energy can be fed from the respective drive coil (241, 245) into the intermediate circuit (203), by means of the respective DC-to-DC converter (261, 263),
a voltage measuring device (211) for measuring an electric intermediate circuit voltage, and
a control device (249) for controlling the DC-to-DC converters (261, 263), wherein the control device (249) is designed to actuate at least one of the DC-to-DC converters (261, 263) in such a way that electrical energy is fed from the intermediate circuit (203) into the drive coil (241, 245) corresponding to the actuated DC-to-DC converter (261, 263) when the intermediate circuit voltage measured by the voltage measuring device (211) is greater than, or greater than or equal to, a predetermined intermediate circuit voltage threshold value, wherein the control device (249) has a voltage monitoring function (251) in order to establish when the intermediate circuit voltage measured by the voltage measuring device (211) is greater than, or greater than or equal to, a predetermined intermediate circuit voltage threshold value,
wherein the control device (249) comprises a regulator request monitoring function (253) in order to establish which drive coils (241, 245) are not currently being used to drive or brake the magnetic rotor,
wherein the control device (249) comprises a thermal monitoring function (257) in order to establish whether a thermal load of the drive coils (241, 245) is less than a predetermined thermal load threshold value, and
wherein the control device (249) comprises an active current request generation function (259) in order to determine which of the drive coils (241, 245) are to be supplied with an active electric current in order to divert the electrical energy from the intermediate circuit (203), wherein those drive coils that are currently being used for regulating the drive of the magnetic rotor and whose thermal load is greater than a predetermined thermal load threshold value are excluded from the supply of energy,
wherein the control device (249) is designed to regulate the active electric current that is injected into the individual drive coils (241, 245) independently.

2. Drive device according to Claim 1, wherein the drive coils (241, 245) and their corresponding own DC-to-DC converters (261, 263) are respectively interconnected as a bridge circuit (213, 215), wherein the drive coils (241, 245) respectively form a bridge branch of the bridge circuit (213, 215), wherein the control device (249) is designed to identify those bridge circuits (213, 215) that are currently not being used to drive the magnetic rotor.

3. Drive device according to Claim 1 or 2, wherein the control device (249) is designed to ascertain, based on a past drive coil current, the extent of a current thermal load of the corresponding drive coil.

4. Drive device according to one of Claims 1 to 3, wherein a position detection device (265) for detecting a position of the magnetic rotor (405) is provided, and wherein those drive coils (241, 245) that are not opposite the magnetic rotor are provided for supplying the energy.

5. Linear drive system (401), comprising the drive device (201) according to one of the preceding claims, a running rail (403) on which one or more carriages (405) are movably arranged, wherein the carriage(s) (405) respectively comprise(s) a magnet (407) as a rotor of the linear motor, wherein the drive coils (241, 245) are arranged along the running rail (403).

6. Method for operating a drive device for a linear motor, comprising multiple drive coils (241, 245) that each have a DC-to-DC converter (261, 263), wherein a direct electric current can be in each case individually injected into the drive coils (241, 245) in order to form a magnetic field that can interact with the magnetic field of a magnetic rotor (405) in order to drive or brake the magnetic rotor, an intermediate circuit (203) that is electrically conductively connected to the drive coils (241, 245) in each case by means of the DC-to-DC converter (261, 263) such that electrical energy can be fed from the intermediate circuit (203) into the respective drive coil (241, 245), or electrical energy can be fed from the respective drive coil (241, 245) into the intermediate circuit (203), by means of the respective DC-to-DC converter (261, 263), a voltage measuring device (211) for measuring an electric intermediate circuit voltage, and a control device (249) for controlling the DC-to-DC converters (261, 263), comprising the following steps:
measuring (501) an electric intermediate circuit voltage by means of the voltage measuring device (211),
actuating (505) at least one DC-to-DC converter (261, 263) by means of the control device (249) in such a way that electrical energy is fed from the intermediate circuit (203) into the drive coil (241, 245) corresponding to the actuated DC-to-DC converter (261, 263) when the measured intermediate circuit voltage is greater than, or greater than or equal to, a predetermined intermediate circuit voltage threshold value,
wherein a voltage monitoring function (251) establishes when the intermediate circuit voltage measured by the voltage measuring device (211) is greater than, or
greater than or equal to, a predetermined intermediate circuit voltage threshold value,
wherein a regulator request monitoring function (253) establishes which drive coils (241, 245) are not currently being used to drive or brake the magnetic rotor,
wherein a thermal monitoring function (257) establishes whether a thermal load of the drive coils (241, 245) is less than a predetermined thermal load threshold value, and
wherein an active current request generation function (259) determines which of the drive coils (241, 245) are to be supplied with an active electric current in order
to divert the electrical energy from the intermediate circuit (203), wherein those drive coils that are currently being used for regulating the drive of the magnetic rotor and whose thermal load is greater than a predetermined thermal load threshold value are excluded from the supply of energy,
wherein the active electric current that is injected into the individual drive coils (241, 245) is regulated independently.

7. Method according to Claim 6, wherein the drive coils (241, 245) and their corresponding own DC-to-DC converters (261, 263) are respectively interconnected as a bridge circuit (213, 215), wherein the drive coils (241, 245) respectively form a bridge branch of the bridge circuit (213, 215), wherein those bridge circuits (213, 215) that are currently not being used to drive the magnetic rotor are identified.

8. Method according to Claim 6 or 7, wherein the extent of a current thermal load of the corresponding drive coil is ascertained based on a past drive coil current.

9. Method according to one of Claims 6 to 8, wherein a position of the magnetic rotor (405) is detected, wherein those drive coils that are not opposite the magnetic rotor are provided for supplying the energy.

## Revendications

1. Dispositif d'entraînement pour un moteur linéaire (201 ; 407), comprenant :
plusieurs bobines d'entraînement (241, 245) qui présentent chacune un convertisseur continu-continu (261, 263), un courant continu électrique pouvant être appliqué individuellement à chacune des bobines d'entraînement (241, 245) pour réaliser un champ magnétique qui peut interagir avec le champ magnétique d'un rotor magnétique (405) afin d'entraîner ou de freiner le rotor magnétique,
un circuit intermédiaire (203) qui est relié de manière électriquement conductrice aux bobines d'entraînement (241, 245) respectivement au moyen du convertisseur continu-continu (261, 263) de sorte qu'au moyen du convertisseur continu-continu (261, 263) respectif, de l'énergie électrique du circuit intermédiaire (203) peut être injectée dans la bobine d'entraînement (241, 245) respective, ou de l'énergie électrique de la bobine d'entraînement (241, 245) respective peut être injectée dans le circuit intermédiaire (203),
un dispositif de mesure de tension (211) pour mesurer une tension électrique de circuit intermédiaire, et
un dispositif de commande (249) pour commander le convertisseur continu-continu (261, 263), le dispositif de commande (249) étant réalisé pour piloter au moins l'un des convertisseurs continu-continu (261, 263) de telle sorte que de l'énergie électrique du circuit intermédiaire (203) peut être injectée dans la bobine d'entraînement (241, 245) correspondant au convertisseur continu-continu (261, 263) piloté quand la tension de circuit intermédiaire mesurée par le dispositif de mesure de tension (211) est supérieure, ou supérieure ou égale, à une valeur seuil de tension de circuit intermédiaire prédéterminée, le dispositif de commande (249) présentant une fonction de surveillance de tension (251) pour constater quand la tension de circuit intermédiaire mesurée par le dispositif de mesure de tension (211) est supérieure, ou supérieure ou égale, à une valeur seuil de tension de circuit intermédiaire prédéterminée,
le dispositif de commande (249) comprenant une fonction de surveillance de demande de régulateur (253) pour constater quelles bobines d'entraînement (241, 245) ne sont pas utilisées actuellement pour entraîner ou freiner le rotor magnétique,
le dispositif de commande (249) comprenant une fonction de surveillance thermique (257) pour constater si une contrainte thermique des bobines d'entraînement (241, 245) est inférieure à une valeur seuil de contrainte thermique prédéterminée, et
le dispositif de commande (249) comprenant une fonction de génération de demande de courant actif (259) afin d'établir lesquelles des bobines d'entraînement (241, 245) doivent être alimentées en courant électrique actif pour dissiper l'énergie électrique du circuit intermédiaire (203), dans lequel, parmi les bobines d'entraînement, celles qui sont actuellement utilisées pour une régulation de l'entraînement du rotor magnétique et dont la contrainte thermique est supérieure à une valeur seuil de contrainte thermique prédéterminée sont exclues de l'alimentation en énergie, le dispositif de commande (249) étant réalisé pour réguler le courant électrique actif qui est appliqué aux bobines d'entraînement (241, 245) individuelles indépendamment les unes des autres.

2. Dispositif d'entraînement selon la revendication 1, dans lequel les bobines d'entraînement (241, 245) et leurs propres convertisseurs continu-continu (261, 263) correspondants sont respectivement interconnectés sous forme de circuit en pont (213, 215), les bobines d'entraînement (241, 245) formant respectivement une branche de pont du circuit en pont (213, 215), le dispositif de commande (249) étant réalisé pour identifier, parmi les circuits en pont (213, 215), ceux qui ne sont pas utilisés actuellement pour entraîner le rotor magnétique.

3. Dispositif d'entraînement selon la revendication 1 ou 2, dans lequel le dispositif de commande (249) est réalisé pour établir, sur la base d'un courant de bobine d'entraînement passé, l'ampleur d'une contrainte thermique actuelle de la bobine d'entraînement correspondante.

4. Dispositif d'entraînement selon l'une quelconque des revendications 1 à 3, dans lequel un dispositif de détection de position (265) pour détecter une position du rotor magnétique (405) est prévu, et dans lequel, parmi les bobines d'entraînement (241, 245), celles qui ne sont pas opposées au rotor magnétique sont prévues pour l'alimentation en énergie.

5. Système d'entraînement linéaire (401), comprenant le dispositif d'entraînement (201) selon l'une quelconque des revendications précédentes,
un rail de roulement (403) sur lequel un ou plusieurs chariots (405) sont montés mobiles,
le ou les chariots (405) comprenant respectivement un aimant (407) en tant que rotor du moteur linéaire, les bobines d'entraînement (241, 245) étant disposées le long du rail de roulement (403).

6. Procédé permettant d'exploiter un dispositif d'entraînement pour un moteur linéaire, comprenant plusieurs bobines d'entraînement (241, 245) qui présentent chacune un convertisseur continu-continu (261, 263), un courant continu électrique pouvant être appliqué individuellement à chacune des bobines d'entraînement (241, 245) pour réaliser un champ magnétique qui peut interagir avec le champ magnétique d'un rotor magnétique (405) afin d'entraîner ou de freiner le rotor magnétique, un circuit intermédiaire (203) qui est relié de manière électriquement conductrice aux bobines d'entraînement (241, 245) respectivement au moyen du convertisseur continu-continu (261, 263) de sorte qu'au moyen du convertisseur continu-continu (261, 263) respectif, de l'énergie électrique du circuit intermédiaire (203) peut être injectée dans la bobine d'entraînement (241, 245) respective, ou de l'énergie électrique de la bobine d'entraînement (241, 245) respective peut être injectée dans le circuit intermédiaire (203), un dispositif de mesure de tension (211) pour mesurer une tension électrique de circuit intermédiaire, et un dispositif de commande (249) pour commander le convertisseur continu-continu (261, 263), comprenant les étapes suivantes consistant à :
mesurer (501) une tension électrique de circuit intermédiaire au moyen du dispositif de mesure de tension (211),
piloter (505) au moins un convertisseur continu-continu (261, 263) au moyen du dispositif de commande (249) de telle sorte que de l'énergie électrique du circuit intermédiaire (203) est injectée dans la bobine d'entraînement (241, 245) correspondant au convertisseur continu-continu (261, 263) quand la tension de circuit intermédiaire mesurée est supérieure, ou supérieure ou égale, à une valeur seuil de tension de circuit intermédiaire prédéterminée,
une fonction de surveillance de tension (251) constatant quand la tension de circuit intermédiaire mesurée par le dispositif de mesure de tension (211) est supérieure, ou supérieure ou égale, à une valeur seuil de tension de circuit intermédiaire prédéterminée,
une fonction de surveillance de demande de régulateur (253) constatant quelles bobines d'entraînement (241, 245) ne sont pas utilisées actuellement pour entraîner ou freiner le rotor magnétique,
une fonction de surveillance thermique (257) constatant si une contrainte thermique des bobines d'entraînement (241, 245) est inférieure à une valeur seuil de contrainte thermique prédéterminée, et
une fonction de génération de demande de courant actif (259) déterminant lesquelles des bobines d'entraînement (241, 245) doivent être alimentées en courant électrique actif pour dissiper l'énergie électrique du circuit intermédiaire (203), dans lequel, parmi les bobines d'entraînement, celles qui sont utilisées actuellement pour une régulation de l'entraînement du rotor magnétique et dont la contrainte thermique est supérieure à une valeur seuil de contrainte thermique prédéterminée sont exclues de l'alimentation en énergie,
le courant électrique actif qui est injecté dans les bobines d'entraînement individuelles (241, 245) étant régulé indépendamment les unes des autres.

7. Procédé selon la revendication 6, dans lequel les bobines d'entraînement (241, 245) et leurs propres convertisseurs continu-continu (261, 263) correspondants sont respectivement interconnectés sous forme de circuit en pont (213, 215), les bobines d'entraînement (241, 245) formant respectivement une branche de pont du circuit en pont (213, 215), dans lequel, parmi les circuits en pont (213, 215) ceux qui ne sont pas utilisés actuellement pour un entraînement du rotor magnétique sont identifiés.

8. Procédé selon la revendication 6 ou 7, dans lequel, sur la base d'un courant de bobine d'entraînement passé, on détermine l'ampleur d'une contrainte thermique actuelle de la bobine d'entraînement correspondante.

9. Procédé selon l'une quelconque des revendications 6 à 8, dans lequel une position du rotor magnétique (405) est détectée, dans lequel, parmi les bobines d'entraînement, celles qui ne sont pas opposées au rotor magnétique sont prévues pour l'alimentation en énergie.
